# EUROPÄISCHE PATENTANMELDUNG

(11) **EP 1 077 363 A2**
(43) Veröffentlichungstag der Anmeldung: **21.02.2001**
(21) Anmeldenummer: 00116749.3
(22) Anmeldetag: 03.08.2000
(51) Int. Cl.: G01D 13/24

(54) **Anzeigeinstrument mit einem Zeiger**

(30) Priorität: 17.08.1999 DE 19939004
(71) Anmelder: Mannesmann VDO AG, 60388 Frankfurt am Main (DE)
(72) Erfinder: Adams, Jürgen, Dipl.-Ing.(FH), 78052 Villingen-Schwenningen (DE)

(57) **Zusammenfassung**

Zur Erhöhung der Signalwirkung einer Kontrolleuchte insbesondere in Verbindung mit einem Anzeigeinstrument innerhalb eines Kombiinstrumentes für Fahrzeuge wird vorgeschlagen, bei einem Anzeigeinstrument mit einem Zeiger (1),
a) wobei der Zeiger (1) eine vor einer Skala (2) bewegbare Zeigerfahne (3) aufweist,
b) wobei die Zeigerfahne (3) an einer die Skala (2) durchstoßenden Zeigerachse (4) angebracht ist,
c) wobei ein hinter der Skala (2) angeordneter Zeigerantrieb (5) die Zeigerachse (4) entsprechend einem anzuzeigenden Meßwert zu einer Drehbewegung veranlaßt,
d) und wobei eine Zeigerkappe (6) an dem auf der Vorderseite der Skala (2) endenden Ende der Zeigerachse (4) angeordnet ist,
die Zeigerkappe (6) mit einer als Leuchtfleck ausgebildeten Kontrolleuchte (7) zu versehen, wobei die Lichtquelle (10) der Kontrolleuchte (7) von einer Steuereinheit (9) unabhängig von einer möglicherweise vorgesehenen Beleuchtung für die Zeigerfahne (3) oder für die Skala (2) steuerbar ist.

## Beschreibung

Die Erfindung betrifft ein Anzeigeinstrument mit einem Zeiger entsprechend dem Oberbegriff des ersten Anspruchs. Sie findet insbesondere bei Anzeigeinstrumenten innerhalb eines Kombiinstrumentes für Fahrzeuge Anwendung. Bei dieser Anwendung wird stets nach Lösungen gesucht, die zu einer Erhöhung der Signalwirkung von Kontrolleuchten führen, wobei die Kontrolleuchten den Fahrzeugführer zum Beispiel auf bestimmte, insbesondere kritische Betriebszustände diverser Einrichtungen im Fahrzeug hinweisen. Durch die ständige Zunahme der einem Fahrzeugführer anzuzeigenden Meldungen wird es bei einem im zentralen Sichtbereich des Fahrzeugführers begrenzten Bauraum für Anzeigeinstrumente und Kontrolleuchten immer schwieriger, geeignete Anordnungen für Kontrolleuchten zu finden, um die von den Kontrolleuchten vermittelten Meldungen für den Fahrzeugführer in ausreichender Weise wahrnehmbar zu machen.

Es ist nun die Aufgabe der vorliegenden Erfindung, in Verbindung mit einem Anzeigeinstrument mit einem Zeiger eine Anordnung aufzuzeigen, die für eine von einer Kontrolleuchte anzuzeigende Meldung eine hohe Signalwirkung aufweist.

Die Lösung zeichnet sich durch die Merkmale des ersten Anspruchs aus. Die abhängigen Ansprüche zeigen vorteilhafte Ausgestaltungen und Weiterbildungen der gefundenen Lösung.

Zunächst einmal ist es vorteilhaft, überhaupt eine Kontrolleuchte in dem Zeiger eines gattungsgemäßen Anzeigeinstrumentes zu integrieren, weil sich auf diese Weise eine besonders exponierte Position für die Kontrolleuchte ergibt, insbesondere wenn die Kontrolleuchte dem Zweck dient, ein Erreichen oder Überschreiten eines Grenzbereiches von dem mit dem Zeiger des Anzeigeinstrumentes anzuzeigenden Meßwert augenfällig zu signalisieren. Als Beispiel für diesen Anwendungsfall sei genannt, wenn das Anzeigeinstrument als Geschwindigkeitsanzeiger oder als Drehzahlmesser ausgebildet ist. Weil derartige Anzeigeinstrumente wie ein Geschwindigkeitsanzeiger oder ein Drehzahlmesser stets im zentralen Sichtbereich des Fahrzeugführers angeordnet sind, ist eine Kontrolleuchte, die in einem gattungsgemäßen Anzeigeinstrument integriert ist, für den Fahrzeugführer gut wahrnehmbar.

In der konkreten Ausgestaltung sieht die vorgeschlagene Lösung vor, daß die Zeigerkappe eines solchen Anzeigeinstrumentes eine als Leuchtfleck ausgebildete Kontrolleuchte aufweist, wobei die Lichtquelle der Kontrolleuchte von einer Steuereinheit unabhängig von einer möglicherweise vorgesehenen Beleuchtung für die Zeigerfahne oder für die Skala des Anzeigeinstrumentes steuerbar ist. Die bei einem gattungsgemäßen Anzeigeinstrument in der Regel ohnehin vorhandene Zeigerkappe wird bei dieser Lösung über ihre Funktion als Abdeckung der Zeigerachse hinaus um die Funktion einer Kontrolleuchte erweitert. Auf diese Weise wird die Zeigerkappe über ihren dekorativen Zweck hinaus einem zusätzlichen Nutzen zugeführt, zumal eine derart angeordnete Kontrolleuchte in bezug auf ihre Signalwirkung in bester Position angeordnet ist.

Anhand von vier Figuren soll die Erfindung nun näher erläutert werden. Dabei zeigen
- **Figur 1** einen Zeiger mit einer integrierten Kontrolleuchte,
- **Figur 2** den Aufbau eines gattungsgemäßen Anzeigeinstrumentes, wobei sich die Lichtquelle der Kontrolleuchte nicht in der Zeigerkappe befindet,
- **Figur 3** einen Zeiger mit einer in der Zeigerkappe integrierten Lichtquelle für die Kontrolleuchte und
- **Figur 4A bis 4C** unterschiedliche Darstellungen des Leuchtfleckes in Abhängigkeit von der Zeigerstellung.

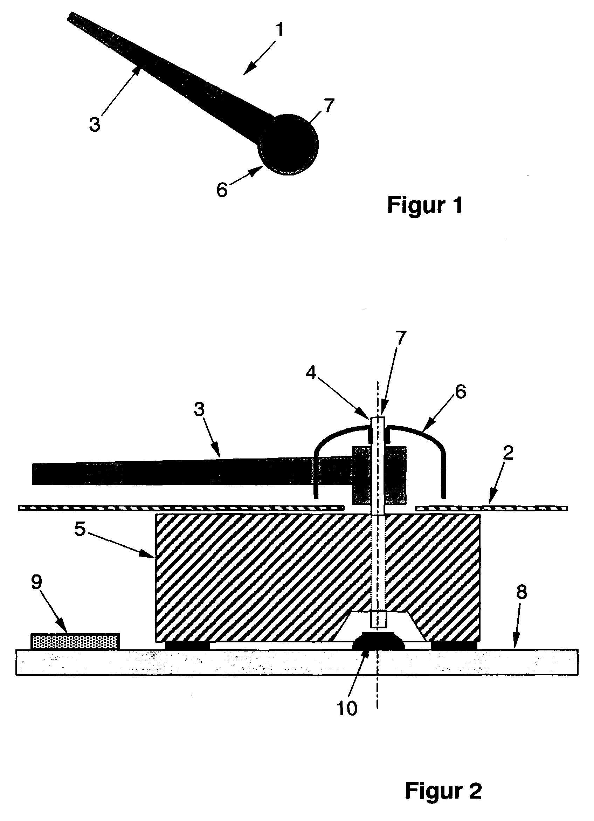

**Figur 1** zeigt einen Zeiger 1 mit einer Zeigerfahne 3 und mit einer in einer Zeigerkappe 6 integrierten Kontrolleuchte 7. Falls die Kontrolleuchte 7 dazu benutzt wird, ein Erreichen oder Überschreiten eines Grenzbereiches von dem mit dem Zeiger 1 des Anzeigeinstrumentes anzuzeigenden Meßwert augenfällig zu signalisieren, kann die Kontrolleuchte 7 ausgeschaltet bleiben oder beispielsweise in grüner Farbe aufleuchten, solange der Grenzbereich noch nicht erreicht oder überschritten ist. Beim Erreichen oder Überschreiten des Grenzbereiches könnte die Kontrolleuchte 7 entweder dauerhaft aufleuchten, zu blinken beginnen oder einen Farbwechsel vollziehen, zum Beispiel von vormals Grün auf Gelb oder Rot. Auch könnte die Lichtstärke der Kontrolleuchte 7 derart gesteuert werden, daß ihre Intensität um so mehr zunimmt, desto kritischer ein anzuzeigender Meßwert zu bewerten ist.

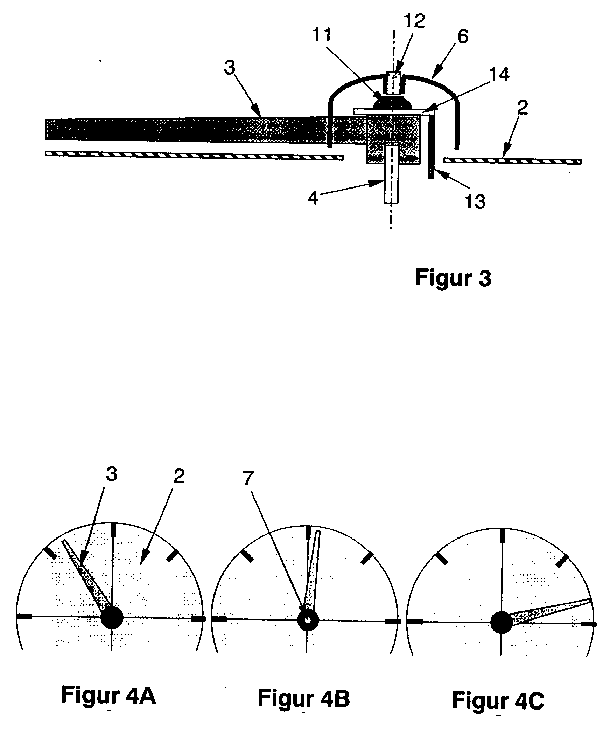

Der **Figur 2** ist nun der grundsätzliche Aufbau eines gattungsgemäßen Anzeigeinstrumentes zu entnehmen, wobei sich in dieser Ausgestaltung des Anzeigeinstrumentes die Lichtquelle 10 der Kontrolleuchte 7 nicht in der Zeigerkappe 6 befindet. Vielmehr koppelt eine Lichtquelle 10 einen Lichtstrom in eine Zeigerachse 4 ein, an welcher die Zeigerfahne 3 vor einer Skala 2 aufgesteckt ist. Dabei ist die Zeigerachse 4 durchgängig in ihrer Längsrichtung zumindest in einem Teilbereich ihres Querschnitts als Lichtleiter ausgebildet. Die Zeigerachse 4, die die Skala 2 lotrecht durchstößt, wird von einem hinter der Skala 2 angeordneten Zeigerantrieb 5 entsprechend einem anzuzeigenden Meßwert zu einer Drehbewegung veranlaßt. Das auf der Vorderseite der Skala 2 endende Ende der Zeigerachse 4 ist bei dieser Ausgestaltung des Anzeigeinstrumentes durch die Zeigerkappe 6 hindurch sichtbar. Die Lichtquelle 10 der Kontrolleuchte 7 ist an dem gegenüberliegenden Ende der Zeigerachse 4 zum Beispiel auf einer Leiterplatte 8 angeordnet. Auch der Zeigerantrieb 5 und eine Steuereinheit 9, die den Lichtstrom der Lichtquelle 10 steuert, können vorteilhafterweise auf derselben Leiterplatte 8 angeordnet sein. Die Lichtquelle 10 kann zum Beispiel aus einer Leuchtdiode, gegebenenfalls auch aus einer Doppelfarben - Leuchtdiode bestehen, der Zeigerantrieb 5 aus einem Schrittmotor und die Steuereinheit 9 aus einem geeigneten integrierten Schaltkreis. Diese Ausführung eines gattungsgemäßen Anzeigeintrumentes hat den fertigungstechnischen Vorteil, daß alle elektrischen bzw. elektronischen Bauteile auf einer einzigen Leiterplatte 8 bestückt werden können und eine elektrische Leitungsführung zur Vorderseite der Skala 2 nicht erforderlich ist.

Nichtsdestoweniger sind aber noch weitere Ausführungen der Erfindung sinnvoll. Eine weitere soll anhand der Figur 3 aufgezeigt werden. **Figur 3** zeigt einen Zeiger 1 bestehend aus einer Zeigerfahne 3 und einer Zeigerkappe 6, wobei in der Zeigerkappe 6 eine Lichtquelle für die Kontrolleuchte 7 integriert ist. Als Lichtquelle für die Kontrolleuchte 7 ist eine Leuchtdiode 11 innerhalb der Zeigerkappe 6 auf einer kleinen Leiterplatte 14 oder einem Flexfilm angeordnet. Die Leuchtdiode 11 könnte aber auch je nach der Ausgestaltung der Zeigerkappe 6 auf der Zeigerkappe 6 angeordnet sein. Die Bestromung und Steuerung der Leuchtdiode 11 erfolgt beispielsweise über auf einem Flexfilm angebrachte oder sonstwie flexibel ausgestaltete Leitungen 13, die die Leuchtdiode 11 durch die Skala 2 hindurch mit der auf der Leiterplatte 8 angeordneten Steuereinheit 9 verbinden. In der Zeigerkappe 6 sind zur Verstärkung der Signalwirkung der Kontrolleuchte 7 Mittel zum Fokussieren des von der Leuchtdiode 11 erzeugten Lichtstromes vorgesehen, wobei diese Mittel aus einer Linse 12 bestehen, die in der Zeigerkappe 6 an der Austrittsstelle des Lichtstromes angeordnet ist. Beim Ausführungsbeispiel gemäß der Figur 2 können diese Mittel auch aus einer speziellen, vorzugsweise konkaven Ausformung der Stirnseite der als Lichtleiter ausgebildeten Zeigerachse 4 bestehen. Die Ausführungsform der Erfindung nach Figur 3 hat den Vorteil, daß es hierbei leichter möglich ist, eine eventuell vorgesehene Ausleuchtung der Zeigerfahne 3 von der Lichtquelle 10 der Kontrolleuchte 7 zu trennen. Gleichfalls ist es bei dieser Ausführung der Erfindung konstruktiv leichter möglich, die Kontrolleuchte 7 in der Zeigerkappe 6 vor einer Beeinflussung durch einen Lichteinfall einer eventuell vorgesehenen Beleuchtung für die Skala 2 abzuschirmen. Ein Fokussieren des von der Leuchtdiode 11 erzeugten Lichtstromes erhöht die Erkennbarkeit einer in der Zeigerkappe 6 integrierten Kontrolleuchte 7 insbesondere in einem hellen Umgebungslicht für das Anzeigeinstrument.

Den beiden in den Figuren 2 und 3 dargestellten Ausführungsformen der Erfindung ist gemeinsam, daß die Kontrolleuchte 7 in der Zeigerkappe 6 in Verlängerung der Zeigerachse 4 angeordnet ist. Diese Anordnung ist vorteilhaft, aber nicht zwingend. Auch eine zur Zeigerachse 4 radial versetzte Anordnung für die Kontrolleuchte 7 wäre möglich, insbesondere wenn in der Zeigerkappe 6 mehrere Kontrolleuchten untergebracht werden sollen, beispielsweise mehrere in SMD-Technik ausgeführte Leuchtdioden.

Die **Figur 4A bis 4C** zeigen unterschiedliche Darstellungen des Leuchtfleckes in Abhängigkeit von der Zeigerstellung. Bei der Zeigerstellung in der Figur 4A ist ein kritischer Meßwert noch nicht erreicht. In diesem Fall soll die Kontrolleuchte 7 noch ausgeschaltet bleiben. Bei der in der Figur 4B gezeigten Zeigerstellung wurde ein kritischer Meßwert soeben überschritten, deshalb leuchtet hier die Kontrolleuchte 7 auf. Mit einem weiteren betragsmäßigen Anstieg des auf der Skala 2 mit der Zeigerfahne 3 anzuzeigenden Meßwertes ist gemäß der Figur 4C vorgesehen, die Anzeige der Kontrolleuchte 7 entweder in ihrer Farbgebung oder in ihrer Intensität zu verändern oder von einem statischen Signal in ein blinkendes Wechselsignal übergehen zu lassen.

## Patentansprüche

1. Anzeigeinstrument mit einem Zeiger (1),
a) wobei der Zeiger (1) eine vor einer Skala (2) bewegbare Zeigerfahne (3) aufweist,
b) wobei die Zeigerfahne (3) an einer die Skala (2) durchstoßenden Zeigerachse (4) angebracht ist,
c) wobei ein hinter der Skala (2) angeordneter Zeigerantrieb (5) die Zeigerachse (4) entsprechend einem anzuzeigenden Meßwert zu einer Drehbewegung veranlaßt,
d) und wobei eine Zeigerkappe (6) an dem auf der Vorderseite der Skala (2) endenden Ende der Zeigerachse (4) angeordnet ist,
**dadurch gekennzeichnet,**
daß die Zeigerkappe (6) eine als Leuchtfleck ausgebildete Kontrolleuchte (7) aufweist, wobei die Lichtquelle (10) der Kontrolleuchte (7) von einer Steuereinheit (9) unabhängig von einer möglicherweise vorgesehenen Beleuchtung für die Zeigerfahne (3) oder für die Skala (2) steuerbar ist.

2. Anzeigeinstrument nach Anspruch 1,
**dadurch gekennzeichnet,**
daß die Kontrolleuchte (7) in der Zeigerkappe (6) in Verlängerung der Zeigerachse (4) angeordnet ist.

3. Anzeigeinstrument nach einem der vorangegangenen Ansprüche,
**dadurch gekennzeichnet,**
a) daß die Zeigerachse (4) durchgängig in ihrer Längsrichtung zumindest in einem Teilbereich ihres Querschnitts als Lichtleiter ausgebildet ist,
b) daß das auf der Vorderseite der Skala (2) endende Ende der Zeigerachse (4) durch die Zeigerkappe (6) hindurch sichtbar ist,
c) daß die Lichtquelle (10) der Kontrolleuchte (7) an dem gegenüberliegenden Ende der Zeigerachse (4) angeordnet ist,
d) und die Lichtquelle (10) ihren von der Steuereinheit (9) gesteuerten Lichtstrom in den als Lichtleiter ausgebildeten Bereich der Zeigerachse (4) einkoppelt.

4. Anzeigeinstrument nach einem der vorangegangenen Ansprüche,
**dadurch gekennzeichnet**,
daß die Kontrolleuchte (7) mindestens eine von der Steuereinheit (9) angesteuerte Leuchtdiode (11) enthält, die auf oder innerhalb der Zeigerkappe (6) angeordnet ist.

5. Anzeigeinstrument nach einem der vorangegangenen Ansprüche,
**dadurch gekennzeichnet,**
daß in der Zeigerkappe (6) Mittel zum Fokussieren des Lichtstromes vorgesehen sind, wobei diese Mittel aus einer speziellen Ausformung der Stirnsette der als Lichtleiter ausgebildeten Zeigerachse (4) oder aus einer in der Zeigerkappe (6) an der Austrittsstelle des Lichtstromes angeordneten Linse (12) bestehen.

6. Anzeigeinstrument nach einem der vorangegangenen Ansprüche,
**dadurch gekennzeichnet**,
daß die Steuereinheit (9) den Leuchtfleck der Kontrolleuchte (7) in Abhängigkeit von dem Drehwinkel, mit dem der Zeigerantrieb (5) die Zeigerachse (4) entsprechend einem anzuzeigenden Meßwert einstellt, in unterschiedlicher Lichtintensität ausbildet.

7. Anzeigeinstrument nach einem der vorangegangenen Ansprüche,
**dadurch gekennzeichnet,**
daß der Leuchtfleck der Kontrolleuchte (7) in Abhängigkeit von dem Drehwinkel, mit dem der Zeigerantrieb (5) die Zeigerachse (4) entsprechend einem anzuzeigenden Meßwert einstellt, in unterschiedlicher Lichtfarbe ausbildet wird.

8. Anzeigeinstrument nach einem der vorangegangenen Ansprüche,
**dadurch gekennzeichnet,**
daß der Leuchtfleck der Kontrolleuchte (7) in Abhängigkeit von dem Drehwinkel, mit dem der Zeigerantrieb (5) die Zeigerachse (4) entsprechend einem anzuzeigenden Meßwert einstellt, von einem statischen Signal in ein blinkendes Wechselsignal übergeht.
